# EUROPEAN PATENT APPLICATION

(11) **EP 1 160 703 A2**
(43) Date of publication of application: **05.12.2001**
(21) Application number: 01112084.7
(22) Date of filing: 28.05.2001
(51) Int. Cl.: G06F 17/60

(54) **Image data administration system**

(30) Priority: 26.05.2000 JP 2000156938
(71) Applicant: Noritsu Koki Co., Ltd., Wakayama-shi, Wakayama 640-8550 (JP)
(72) Inventor: Usami, Yasushi, Wakayama-shi, Wakayama 640-8550 (JP)
(74) Representative: Müller-Boré & Partner Patentanwälte

(57) **Abstract**

In an image data administration system, a customer can upload a plurality of image data with attached information such as a date and a keyword from his terminal equipment (2) such as a personal computer to an image data administration apparatus (1). When the customer wished to survey or to print an index images in which a plurality of images having a specific information are arranged, he transmits a specific information to the image data administration apparatus (1). The image data administration apparatus (1, 103) selects the image data having the same specific information and forms an index image data using the selected image data and transmits the index image data to the terminal equipment (2) of the customer or a photographic printer (3) at a photo shop. Thus, the customer can survey or obtain the index image.

## Description

The present invention relates to an image data administration system in which image data are communicated among a plurality of terminal equipments provided at storefronts of photo shops, a data base server for administering a lot of image data, and a terminal equipment of a customer via a network.

In recent years, photographic prints using digital image data taken by a digital camera or a scanner are printed by a photographic printer provided at storefront of a photo shop. The photographic printer includes a control unit having a function similar to a personal computer, so that the control unit of the photographic printer of each photo shop can communicate with personal computers of the customers and a data base server supported by a vendor of the photographic printer via an internet.

In such a data communication system, the customer can order the photo shop for printing photographic prints and transmit the image data to the photo shop from his terminal equipment such as the personal computer. Furthermore, it is possible to administrate the image data with respect to each customer who resistors his customer's ID (identification) in the data base server, so that the customer can utilize the services for surveying or editing an electronic album. Still furthermore, the customer can order the photo shop to reprint the photographic prints by using the image data memorized in the data base server. When the data base server receives the order from the customer via the network, the data base server searches the image data according to the order from the memory thereof and transmits the image data to the photo shop with the contents of the order. When the photographic prints are printed by the photo shop, the customer can receive the photographic prints via the mail or at the storefront.

In the conventional image data administration system, when the customer wishes to survey an index image, in which a plurality of thumbnail images are arranged, on a monitor display of the terminal equipment, it is necessary to search the image data from the memory of the data base server and to appoint the order of the images. Thus, it is troublesome to the customer to survey the index image on the monitor display.

An object of the present invention is to provide an image data administration system by which the customer can easily survey the index image on the monitor display of the terminal equipment or to order for printing the index image on a photographic paper by using the image data administrated in the data base server. Hereinafter, the photographic paper on which a plurality of thumbnail images are arranged is called "index print".

An image data administration system in accordance with the present invention comprises an image data administration apparatus, at least one photographic printer and a network for communicating the image data administration apparatus and the photographic printer to at least one terminal equipment of a customer.

The image data administration apparatus further comprises: a first data communication unit connected to the network so as to communicate with the terminal equipment and the photographic printer; an image data memory for memorizing a plurality of image data with respect to each customer transmitted from the terminal equipment; an image information memory for memorizing at least one information attached with each image data; a first image data selector for selecting first image data having a specific information among the image data memorized in the image data memory when the specific information transmitted from the terminal equipment of the customer is received; a first index image data processor for forming a first index image data in which a plurality of thumbnail images corresponding to the first image data selected by the first image data selector are arranged in a predetermined order and for outputting the first index image data to the terminal equipment of the customer via the first data communication unit; a second image data selector secondary for selecting at least one image data among the image data having the specific information corresponding to an instruction data transmitted from the customer; and a second index image data processor for renewing the first index image data corresponding to the selection by the customer with using secondary selected image data and for outputting renewed index image data to the terminal equipment of the customer; and a print order processor for forming a print order file including instructions to a photographic printer which is instructed by the customer and for transmitting the image data and the renewed index image data with the print order file and for outputting them to the photographic printer via the first data communication unit when the second index image data are confirmed by the customer.

The photographic printer further comprises: a second data communication unit for receiving the image data and the renewed index image data with the print order file from the image data administration apparatus; an exposing unit for exposing a sensitized surface of a photographic paper by using the image data and the index image data; and a developing unit for developing the exposed photographic paper for printing photographic prints corresponding to the image data and for printing an index print corresponding to the index image data.

By such a configuration, when the customer inputs a specific information such as a keyword corresponding to a name of an object in the images, the image data administration apparatus searches all the image data having the same information and forms an index image data. The customer can easily survey the index image on the monitor display of his terminal equipment by using the index image data transmitted from the image data administration apparatus. Furthermore, the customer can obtain an index print which is printed by the photographic printer by using the index image data.

### BRIEF DESCRIPTION OF THE DRAWINGS

FIG. 1 is a block diagram schematically for showing a configuration of an image administration system in an embodiment of the present invention;
FIG. 2 is a block diagram for showing a hardware configuration of an image data administration apparatus, a terminal equipment and a controller of a photographic printer in the image administration system in the embodiment;
FIG. 3 is a block diagram for showing a configuration of a virtual controller of an index printer when a program for printing an index print is executed in a processing unit of the image data administration apparatus in the embodiment;
FIG. 4 is a flowchart for showing steps of an index print printing processes;
FIG. 5 is a drawing for showing a table for administrating customers' IDs used in a step ST11 in the flowchart shown in FIG. 4;
FIG. 6 is a flowchart for showing a subroutine flow of the image data registration process in a step ST17 in the flowchart in FIG. 4;
FIG. 7 is a drawing for showing an example of a display on a monitor display of the terminal equipment in a step 171 in the flowchart shown in FIG. 6;
FIG. 8 is a drawing for showing an example of an image information table used in the image data registration process and in the index image data forming process in the embodiment;
FIG. 9 is a flowchart for showing a subroutine flow of an index image data forming process in a step ST18 in the flowchart shown in FIG. 4;
FIG. 10 is a drawing for showing an example of a display on the monitor display of the terminal equipment in a step ST182 in the flowchart shown in FIG. 9;
FIG. 11 is a drawing for showing another example of a display on the monitor display of the terminal equipment in the step ST182;
FIG. 12 is a flowchart for showing a subroutine flow of a print order process in a step ST19 in the flowchart shown in FIG. 4; and
FIG. 13 is a drawing for showing an example of a display on the monitor display of the terminal equipment in a step ST194 in the flowchart shown in FIG. 12.

### DETAILED DESCRIPTION OF THE EMBODIMENT

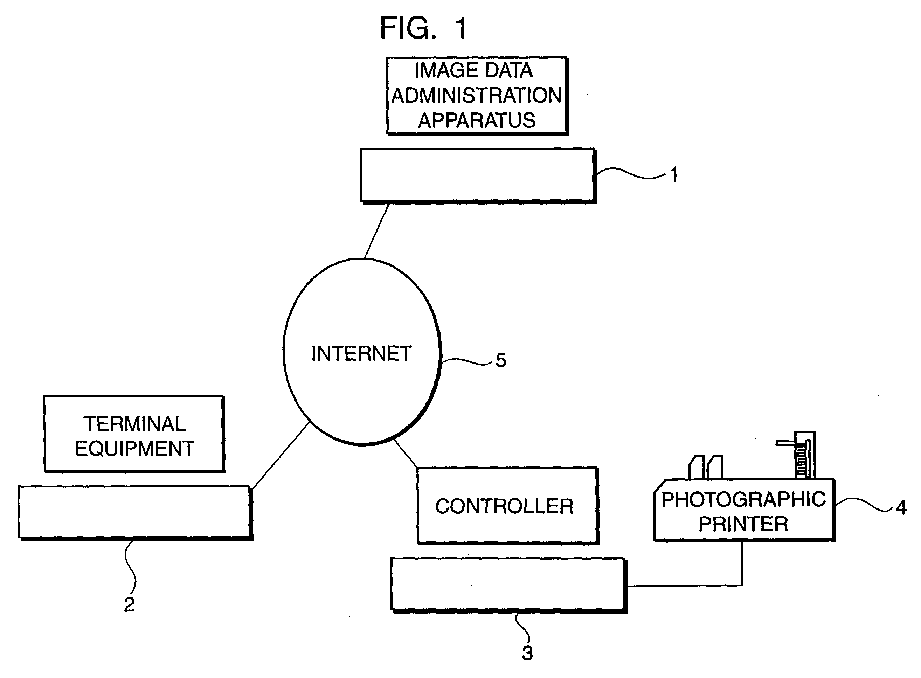

An embodiment of the present invention is described. FIG. 1 schematically shows a configuration of an image administration system in the embodiment.

A terminal equipment 2 of a customer such as a personal computer, a controller 3 of a photographic printer 4 provided at a storefront of a photo shop, and an image data administration apparatus 1 are communicated by an internet 5. The terminal equipment 2 has an interface by which a digital camera or a scanner can be connected, so that the customer can transmit image data taken by the digital camera or the scanner to the controller 3 of the photographic printer 4 with an order for printing photographic prints by using the image data or upload the image data to the image data administration apparatus 1 with an instruction of memorization.

The controller 3 further serves as a terminal equipment of the photo shop. The photographic printer 4 comprises a laser scanning unit for exposing a photographic paper by using an image data and a developing unit for developing the exposed photographic paper. Hereupon, the photographic paper sheet on which a visual image is formed by processes of exposure, development and drying is called photographic print. The controller 3 receives the order and the image data transmitted from the terminal equipment 2 of the customer via the internet 5 and controls the laser scanning unit and the developing unit of the photographic printer 4.

The image data administration apparatus 1 has a sufficient capacity of a memory for memorizing a lot of image data with respect to each customer registered in the image data administration system. The customer can uploads the image data to the image data administration apparatus 1 at any time until the expiry of the term of contract, and can instruct the image data administration apparatus 1 to download the image data to the controller 3 of the photographic printer 4 with an instruction for printing a table of visual images by using the image data.

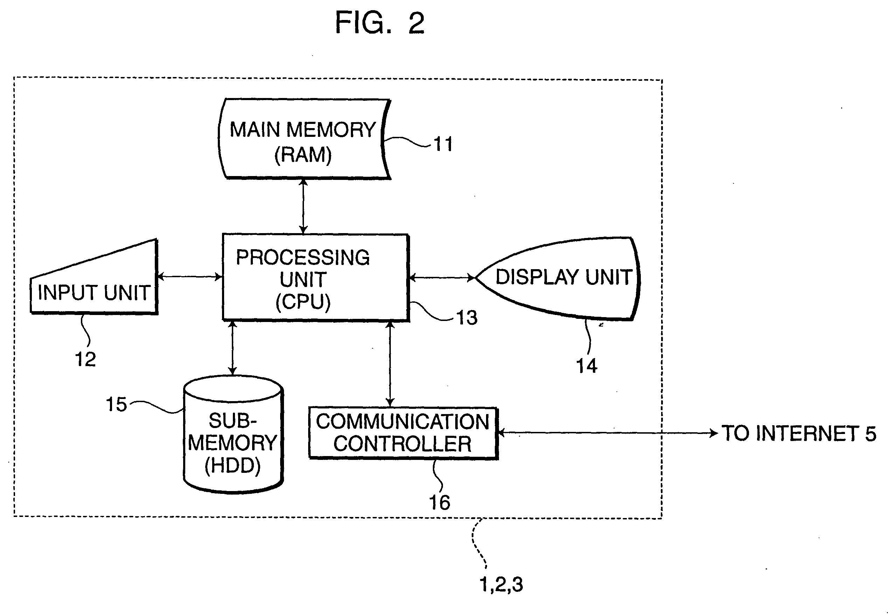

FIG. 2 shows a hardware configuration of the image data administration apparatus 1, the terminal equipment 2 and the controller 3 of the photographic printer 4. The image data administration apparatus 1, the terminal equipment 2 and the controller 3 respectively configured by a main memory 11 such as a RAM (Random Access Memory), an input unit 12 including a keyboard, a mouse and so on, a processing unit 13 such as a CPU (Central Processing Unit), a display unit 14 including a monitor display such as a CRT (Cathode Ray Tube), a sub-memory 15 such as a hard disc and a communication controller 16 including an interface, a modem and so on.

The customer, an operator of the photo shop or an operator in the data base server can input an instruction, an order and so on by using the input unit 12. The main memory 11 temporarily memorizes a program and data. The display unit 14 displays predetermined messages corresponding to a program executed by main processor 13 or reproducing visual images by using the image data on the monitor display. The sub-memory 15 memorizes a plurality of programs and data including the image data. The communication controller 16 communicates the instruction and the data to another equipment via the internet 5. The main processor 13 not only controls the display unit 14 and the communication controller 16 but also executes a program loaded on the main memory 11.

In the image data administration apparatus 1, software programs for functionalizing the image data administration apparatus 1 as a internet server and a data base server are installed on a predetermined operating system in the sub-memory 11. In the terminal equipment 2 or the controller 3 of the photographic printer 4, a WWW browser is installed in the sub-memory 11 thereof. In the terminal equipment 2 of the customer, a software program for reading the image data from the digital camera is further installed. In the controller 3 of the photographic printer 4, software programs for controlling the exposure and the development operations of the photographic paper in the photographic printer 4 are further installed.

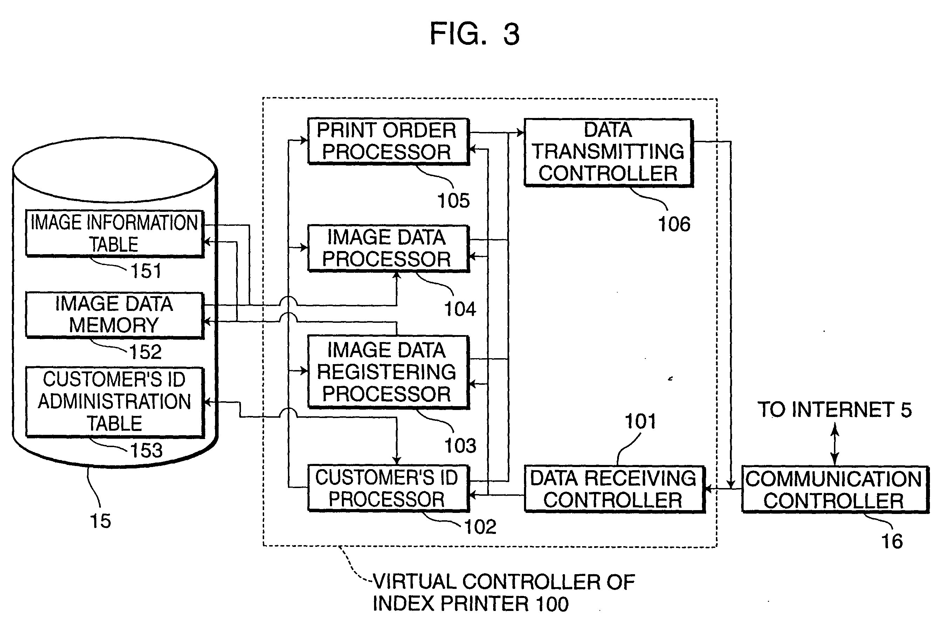

An index print printing processes by using the image data administration system in the embodiment is described with reference to FIGS. 3 to 13. A photographic print on which a plurality of thumbnail visual images are arranged is called "index print". In the following description, the processes in the image data administration apparatus 1 are mainly described, and the processes in the terminal equipment 2 and the controller 3 of the photographic printer 4 are omitted because the processes corresponding to the instructions from the image data administration apparatus are executed therein.

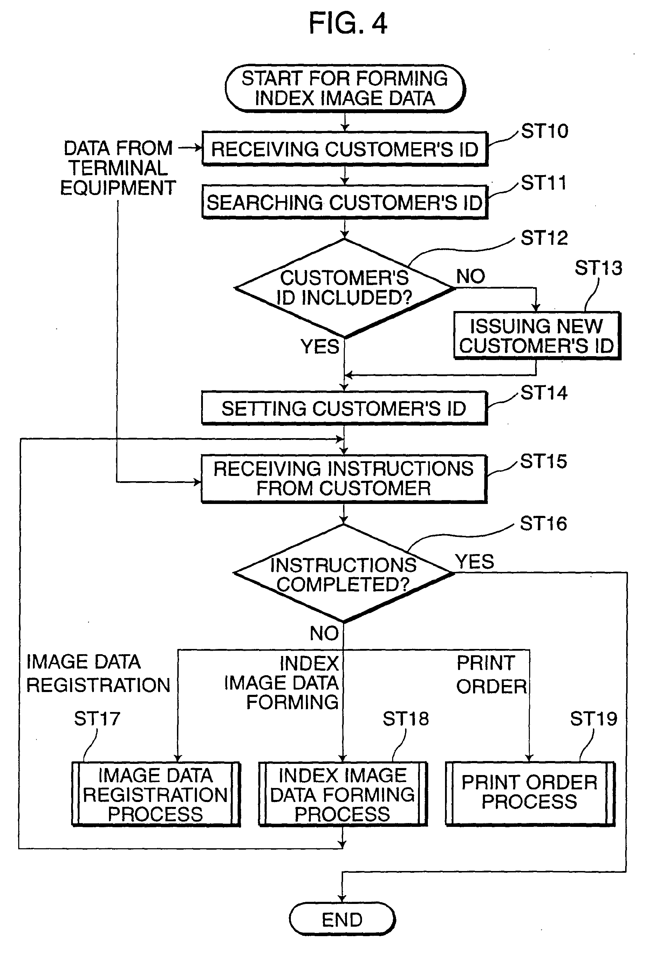

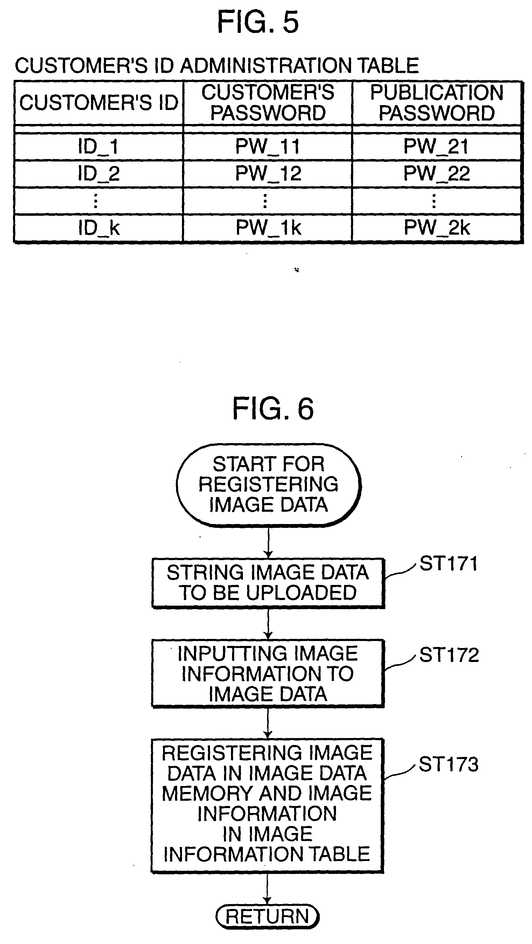

FIG. 3 shows a block diagram for showing a configuration of a virtual controller of an index printer when a program for printing an index print is executed in the processing unit 13 of the image data administration apparatus 1. FIG. 4 shows a flow of the steps of the index print printing processes. FIG. 5 shows a table for administrating customers' IDs used in a step ST11 in the flowchart shown in FIG. 4.

As can be seen from FIG. 3, the virtual controller 100 of the index printer comprises a data receiving controller 101 for receiving a data from the terminal equipment 2 or the controller 3 of the photographic printer 4 via the communication controller 16 and the internet 5, and a data transmitting controller 106 for transmitting a data to the terminal equipment 2 or the controller 3 of the photographic printer 4.

The virtual controller 100 further comprising a customer's ID processor 102, an image data registering processor 103, an index image data processor 104 and a print order processor 105. The customer's ID processor 102 not only registers the customer's ID into a customer's ID administration table 153 but also administrates to access the image data administration apparatus 1 by the customer. The image data registering processor 103 registers or memorizes the image data into an image data memory 152 and an image information including a keyword, for example, for specific an object in the image and a date information for showing date and time when the image data is taken into an image information table 151, when the image data are uploaded from the terminal equipment 2 of the customer. The index image data processor 104 processes the image data and the image information for forming an index image data which will be used for printing thumbnail images on the index print. The print order processor 105 forms an order file including the index image data and an instruction for printing the index print by using the index image data. The order file will be transmitted to the controller 3 of the photographic printer 4.

The processes in the customer's ID processor 102, in the image data registering processor 103, in the index image data processor 104 and the print order processor 105 can be corresponded to the processes in steps ST10 to ST14, and ST17 to ST19 in the flowchart shown in FIG. 4. Details of which will be described below.

In the index print data forming processes shown in FIG. 4, a message for requiring the customer to input his customer's ID on the monitor display of the terminal equipment 2. When the message is displayed, the customer inputs his customer's ID with a password by following a predetermined operation, for example, clicking a specific button on the display of the WWW browser. Subsequently, the terminal equipment 2 transmits the customer's ID to the image data administration apparatus 1.

When the customer's ID is transmitted, the customer's ID processor 102 in the image data administration apparatus 1 receives the customer's ID (Step ST10). The customer's ID processor 102 searches in the customer's ID administration table 153 whether the customer's ID is included therein or not (Steps ST11 and ST12). When the customer's ID cannot be found, the customer's ID processor 102 issues a new customer's ID (Step ST13). Alternatively, when the customer's ID can be found, the customer's ID processor 102 simultaneously checks whether the password is proper or not in the step ST12. When the password is proper in the step ST12 or the new customer's Id is issued in the step ST13, the customer's ID processor 102 sets the customer's ID for identifying the customer in the following processes (Step ST14).

For describing in detail, the customer's ID administration table shown in FIG. 5 is used for searching the customer's ID. As can be seen from FIG. 5, a customer's password and a publication password are prepared with respect to each customer's ID. The customer's password is used for allowing the registration, surveying, printing and erasing of the image data. The publication password is used only for allowing the surveying and printing of the image data. For example, the customer inputs the customer's password with the customer's ID from the terminal equipment 2, by which he can instruct the registration, surveying, printing and/or erasing of the image data. The operator at the photo shop inputs the publication password with the customer's ID form the controller 3 of the photographic printer 4, by which the photographic printer 4 can print the photographic prints with using the image data instructed by the customer.

When the customer's ID is set in the step ST14, the data receiving controller 101 receives the instructions of the customer transmitted from the terminal equipment 2 (Step ST15). Subsequently, the data receiving controller 101 judges whether the transmission of the instructions from the customer is completed or not (Step ST16). The image data registration processor 103 executes the image data registration process corresponding to the instruction for registering the image data (Step ST17). The index image data processor 104 executes the index image data forming process corresponding to the instruction for forming the index image data (Step ST18). The print order processor 105 executes the print order process corresponding to the instruction for printing of the photographic print by using the image data instructed by the customer (Step ST19). When the transmission of the instructions is completed, the index image data forming processes are completed.

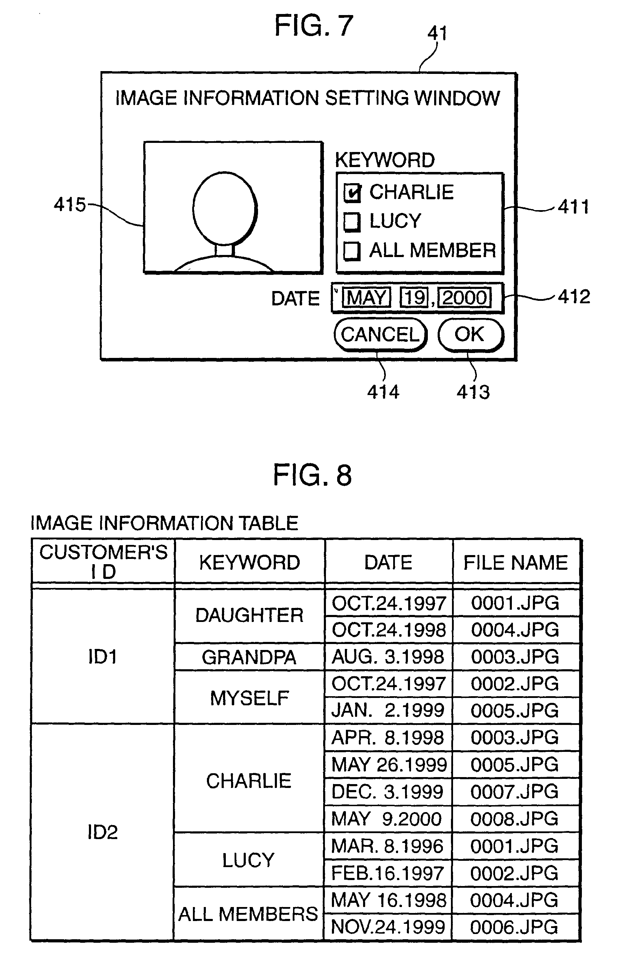

FIG. 6 shows a subroutine flow of the image data registration process in the step ST17. FIG. 7 shows an example of a display on the monitor display of the terminal equipment 2 in a step 171 in the flowchart shown in FIG. 6. FIG. 8 shows an example of the image information table 151 used in the image data registration process and in the index image data forming process. Hereupon, it is assumed that the image data are uploaded by the customer from the terminal equipment 2 to the image data administration apparatus 2. It, however, is possible to upload the image data by the operator at the photo shop from the controller 3 of the photographic printer 4 by properly inputting the customer's ID and the password.

When the image data registration process starts, the image data which are to be uploaded are inputted to the terminal equipment 2 by the customer and stored in a directory specified by the customer's ID, while the visual images corresponding to the inputted image data are reproduced on the monitor display of the terminal equipment 2 (Step ST171). Subsequently, the image information such as a keyword and a date information are inputted corresponding to each image data to be uploaded (Step ST172). When the image data with the image information are prepared, they are transmitted to the image data administration apparatus 1 from the terminal equipment 2. In the image data administration apparatus 1, the image data are memorized in the image data memory 152 and the image information is memorized at a specific address corresponding to each image data or a file name in the image information table by the image data registration processor 103 (Step ST173). Thus, the image data registration process is completed.

Hereupon, it is assumed that the display 41 shown in FIG. 7 is displayed on the monitor display of the terminal equipment 2. The visual image corresponding to the image data to be uploaded is reproduced in an image reproducing area 415. A plurality of keywords such as names of the customer's family are displayed in a keyword displaying area 411. In this example, keywords such as "CHARLIE", "LUCY" and "ALL MEMBERS" can be selectable for specifying the object in the image. By checking the keyword "CHARLIE", the keyword "CHARLIE" can be inputted for specific the object.

A date, for example, "MAY 19, 2000" at which the image data was taken is displayed in a date displaying area 412. Generally, the information such as the data, the number of the image data having a predetermined style such as DPOF (Digital Print Order Format) are memorized in a memory card used in the digital camera. The image data can be read out with the information of the date from the memory card, so that the date can automatically be displayed in the date displaying area 412. The customer, however, can input or change the date, manually.

After inputting the keyword and confirming the date, when a button 413 for designated by a symbol "OK" is clicked, the keyword is defined. Alternatively, when a button 414 for designated by a symbol "CANCEL" is clicked, the inputted keyword is canceled.

The image information inputted by the above-mentioned steps are administrated in the image information table shown in FIG. 8. For example, when the image data having a file name "0005.JPG" is considered, it is found that the image data was uploaded by the customer having the customer's ID "ID2" and is attended with a date information "MAY 26, 1999" and a keyword "CHARLIE".

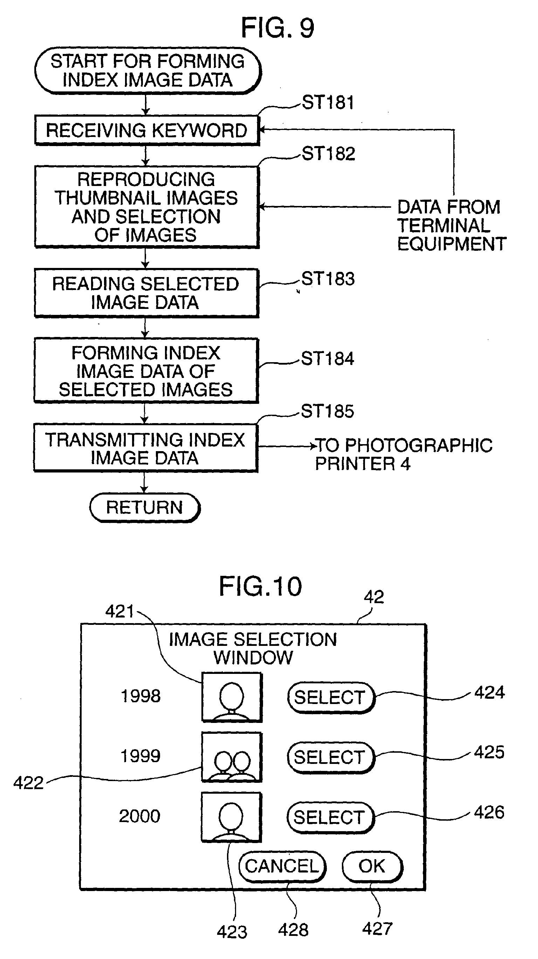

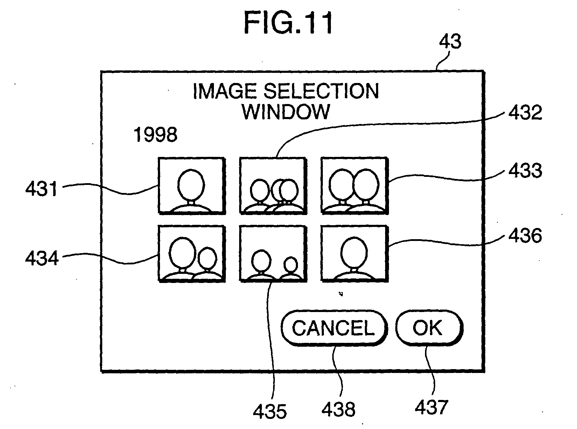

FIG. 9 shows a subroutine flow of the index image data forming process in the step ST18. FIGS. 10 and 11 respectively show examples of a display on the monitor display of the terminal equipment 2 in a step ST182 in the flowchart shown in FIG. 9.

When the index image data forming process starts, a message for requiring the customer to input the keyword is displayed, and the keyword inputted by the customer is received by the customer's ID processor 102 (Step ST181). When the keyword is transmitted from the terminal equipment 2 of the customer, the thumbnail image data in the image data file attended with the same keyword are searched from the image data memory 152, and the thumbnail image data are transmitted to the terminal equipment 2 of the customer from the image data administration apparatus 2. The thumbnail image using the thumbnail image data are reproduced in an order of the date on the monitor display of the terminal equipment 2. When the customer selects any thumbnail images, the file names of the selected thumbnail images are re-transmitted to the image data administration apparatus 1, and the index image data processor 104 receives the file names of the selected thumbnail images (Step ST182).

For selecting the thumbnail images, a plurality of the thumbnail images with the keywords are reproduced in image reproducing areas 421, 422, 423 in the image selection window 42 on the monitor display of the terminal equipment 2, as shown in FIG. 10 which is an initial display in the selection of the thumbnail image data. When the customer further clicks a button 427 designated by a symbol "OK", the selection of the thumbnail images selected at the time are defined. Alternatively, when the customer clicks a button 428 designated by a symbol "CANCEL", the selection of the thumbnail images can be canceled. The buttons 424, 425 and 426 designated by symbols "SELECT" are switches for changing display style of the thumbnail images on reproduced on the monitor display of the terminal equipment 2. For example, when the button 424 is clicked, the display style on the monitor display of the terminal equipment 2 is changed to the example shown in FIG. 11.

In FIG. 11, the thumbnail images reproduced in the image reproducing areas 431 to 436 are the images having the same keyword such as "1998" designating that the images are taken in the year 1998. For selecting the images to be printed among the thumbnail images having the same keyword, the user directly clicks the thumbnail image which he wishes to print. When the customer further clicks a button 437 designated by a symbol "OK", the thumbnail images selected at the time are defined. Alternatively, when the customer clicks a button 438 designated by a symbol "CANCEL", the selection of the thumbnail images can be canceled.

In the example shown in FIG. 10, one of the thumbnail images taken in the same years 1998, 1999 and 2000 are respectively reproduced in the image reproducing areas 421 to 423. It, however, is possible to reproduce the thumbnail images with respect to the order of months at which the image data are taken in the same year. Furthermore, it is possible to reproduce the thumbnail images in the order of date the image data are taken with no relation to the month or the year.

When the thumbnail images are selected by the customer, the file names of the selected image data are transmitted to the image data administration apparatus 1 from the terminal equipment 2. The index image data processor 104 reads out the image data of the selected images from the image data memory 152 (Step ST183). Subsequently, the index image data processor 104 forms an index image data in which the selected thumbnail image data are arranged, for example, in the order of the date at which the image data are taken (Step ST184). The image data read out from the image data memory 152 and the index image data formed by the index image data processor 104 will be transmitted to the controller 3 of the photographic printer 4 at the photo shop with the print order by the data transmitting controller 106. When the index image data is formed, the index image data forming process is completed.

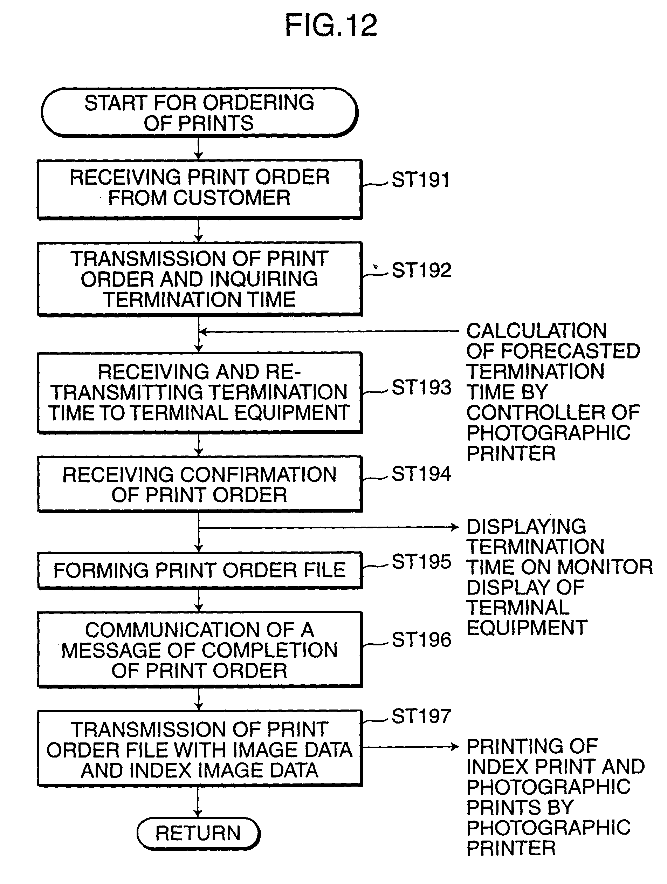

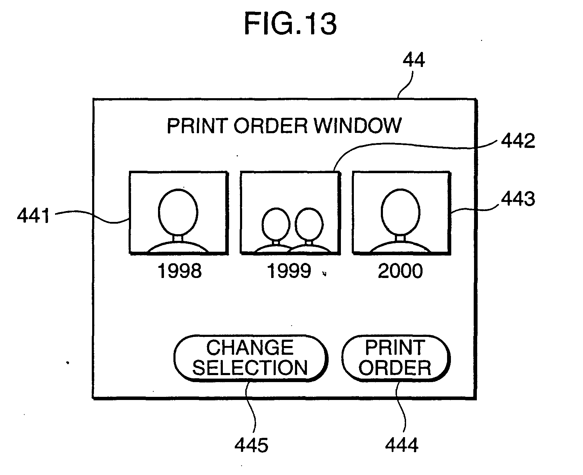

FIG. 12 shows a subroutine flow of the print order process in the step ST19. FIG. 13 shows an example of a display on the monitor display of the terminal equipment 2 in a step ST194 in the flowchart shown in FIG. 12.

When the print order process starts, messages for requiring the customer to input the print order or the printing conditions such as the size, the number of photographic print with respect to each selected image, method for receiving the photographic prints and method for paying the printing fee are displayed on the monitor display of the terminal equipment 2. When the customer inputs the print order by following the messages, the instruction is transmitted to the image data administration apparatus 1 and the print order processor 105 receives the print order from the customer (Step ST191). The print order processor 105 transmits the print order from the customer to the controller 3 of the photographic printer 4 at the photo shop, and inquires the controller to answer a forecasted termination time of the printing (Step ST192).

When the controller 3 of the photographic printer 4 receives the print order and the inquiry of the termination time of the printing, it calculates a processing time necessary for printing all the photographic prints included in the print order and an waiting time while other print orders are executed. The controller 3 further calculates the forecasted termination time for the print order using the processing time and the waiting time.

The calculated forecasted termination time of the print order is transmitted to the image data administration apparatus 1, and further re-transmitted to the terminal equipment 2 of the customer (Step ST193). Thus, the forecasted termination time such as 14:30 and the name of the photo shop at which the customer can receive the photographic prints are displayed on the monitor display of the terminal equipment 2. Subsequently, a message for confirming the print order is displayed on the monitor display of the terminal equipment 2. When the customer inputs a predetermined confirmation command corresponding to confirm the print order, the confirmation command is transmitted to the image data administration apparatus 1 and the print order processor 105 receives the confirmation command (Step ST194).

At this time, a print order window 44 shown in FIG. 13 is displayed on the monitor display of the terminal equipment 2. The images reproduced in the image reproducing areas 441 to 443 are included in the index image data. When the customer clicks a print order button 444, the contents in the print order are defined. Alternatively, when the customer clicks a change selection button 445, the flow returns to the step ST18 for allowing the change of the images to be printed.

When the print order is confirmed by the customer, the print order processor 105 forms a formal print order file including the customer's ID, names of image files used for printing the photographic prints, size of each photographic prints, number of each photographic print, a method to receive the photographic prints, and a method to pay the fee (Step ST195). Simultaneously, the print order processor 105 transmits a message to the customer for communicating that the print order operation is completed (Step ST196). Subsequently, the data transmission controller 106 transmits the print order file with the image data and the index image data to the controller 3 of the photographic printer 4 (Step ST197). Thus, the print order process is completed.

In the controller 3 of the photographic printer 4, the contents of the print order file are referred while the index print and the photographic prints are printed by the photographic printer 4. When the photographic prints are printed, they are delivered to the customer by following the method instructed in the print order, and the customer pays the fee to the photo shop by following method instructed in the print order.

As mentioned above, in the image data administration system in the embodiment of the present invention, the image data and the image information such as the date and the keyword are uploaded from the terminal equipment 2 of the customer to the image data administration apparatus 1 serving as the data base server, and the image data and the image information are memorized in the image data administration apparatus 1 for the image data forming process or the printing process which will be executed in the future. When the forming of the index image is instructed from the terminal equipment 2 of the customer, the image data administration apparatus 1 executes the image data forming process for forming an index image data in which the thumbnail images are arranged corresponding to the keyword and/or date attached to the image data. The index image data is transmitted to the photographic printer 4 at the photo shop with the image data and the print order file, so that the index print is printed with the photographic prints instructed in the print order file.

In the image data administration apparatus 1, the image data are especially administrated corresponding to the data and the keyword, so that the customer can easily form a table in which the images are arranged in the order of the date at which the image was taken from the past to now by using the image data administrated in the image data administration apparatus 1 by operating the terminal equipment 2. For example, a history of a growth of a child can be formed easily. Thus, it is no need to memorized the image data in the memory of the terminal equipment 2 in a long time.

Furthermore, two kinds of passwords are prepared with respect to each customer's ID in the image data administration system in the embodiment, so that one is used as the customer's password for identifying the customer himself and the other is used as the publication password for identifying a person who is allowed to access the image data administrated in the image data administration apparatus 1 by the customer. Thus, the specific person taught the publication password can access the image data of the customer for surveying or printing the image.

## Claims

1. An image data administration apparatus (1) comprising:
a data communication unit (16, 101, 106) connected to at least one terminal equipment (2) of a customer and at least one photographic printer (3) via a network (5);
an image data memory (152) for memorizing a plurality of image data with respect to each customer transmitted from the terminal equipment;
an image information memory (151) for memorizing at least one information attached and transmitted with each image data;
an image data selector (103) for selecting all image data having a specific information among the image data memorized in the image data memory (152) when the specific information transmitted from the terminal equipment of the customer is received; and
an index image data processor (104) for forming an index image data in which a plurality of thumbnail images corresponding to the image data selected by the image data selector or selected by the customer are arranged in a predetermined order and for outputting the index image data via the data communication (16, 106) unit to at least one of the terminal equipment (2) of the customer and the photographic printer (3).

2. The image data administration apparatus (1) in accordance with claim 1 further comprising: a print order processor (105) for forming a print order file including instructions to a photographic printer (3) which is instructed by the customer and for transmitting the image data and the index image data with the print order file so as to print photographic prints corresponding to the image data and an index print corresponding to the index image data.

3. The image data administration apparatus (1) in accordance with claim 1 or 2, wherein
the image data selector (103) further has a function secondary for selecting at least one image data among the image data having the specific information corresponding to a selection by the customer when the data communication unit further receives an instruction data corresponding to the selection from the terminal equipment of the customer; and
the index image data processor (104) renews the index image data corresponding to the selection by the customer with using secondary selected image data and outputs renewed index image data to the terminal equipment of the customer.

4. The image data administration apparatus (1) in accordance with one of claims 1 to 3, wherein the information attached with each image data includes at least one of a predetermined date information with respect to a date at which the image data is taken and a predetermined object information with respect to an object in the image.

5. An image data administration system comprising an image data administration apparatus (1), at least one photographic printer (3) and a network (5) for communicating the image data administration apparatus (1) and the photographic printer (3) to at least one terminal equipment (2) of a customer, wherein
the image data administration apparatus (1) further comprises:
a first data communication unit (16, 101, 106) connected to the network (5) so as to communicate with the terminal equipment (2) and the photographic printer (3);
an image data memory (152) for memorizing a plurality of image data with respect to each customer transmitted from the terminal equipment (2);
an image information memory (151) for memorizing at least one information attached and transmitted with each image data;
a first image data selector (103) for selecting first image data having a specific information among the image data memorized in the image data memory (152) when the specific information transmitted from the terminal equipment (2) of the customer is received;
a first index image data processor (104) for forming a first index image data in which a plurality of thumbnail images corresponding to the first image data are arranged in a predetermined order and for outputting the first index image data to the terminal equipment (2) of the customer via the first data communication unit (16, 106);
a second image data selector (103) secondary for selecting at least one image data among the image data having the specific information corresponding to a selection data transmitted from the terminal equipment (2) of the customer; and
a second index image data processor (104) for renewing the first index image data corresponding to the selection by the customer with using secondary selected image data and for outputting renewed index image data to the terminal equipment (2) of the customer; and
a print order processor (105) for forming a print order file including instructions to a photographic printer (3) which is instructed by the customer and for transmitting the image data and the renewed index image data with the print order file and for outputting them to the photographic printer (3) via the first data communication unit (16, 106) when the second index image data are confirmed by the customer;
the photographic printer (3) further comprises:
a second data communication unit (16 in FIG. 2) for receiving the image data and the renewed index image data with the print order file from the image data administration apparatus;
an exposing unit for exposing a sensitized surface of a photographic paper by using the image data and the index image data; and
a developing unit for developing the exposed photographic paper for printing photographic prints corresponding to the image data and for printing an index print corresponding to the index image data.

6. The image data administration system in accordance with claim 5, wherein the terminal equipment (2) of the customer has a monitor display (14), and a data communication unit (16) of the image data administration apparatus transmits the index image data to the terminal equipment (2) of the customer to be displayed on the monitor display (14).

7. The image data administration system in accordance with claim 5 or 6, wherein the photographic printer (3) further comprises a control unit for calculating forecasted termination time when all the photographic prints instructed in the print order file will be completed, and the second data communication unit (16) transmits the forecasted termination time to the first data communication unit of the image data administration apparatus (1).

8. The image data administration system in accordance with claim 7, wherein the first data communication unit (16, 106) of the image data administration apparatus (1) re-transmits the calculating forecasted termination time to the terminal equipment (2) of the customer to be displayed on the monitor display (14).

9. The image data administration system in accordance with one of claims 5 to 8, wherein the information attached with each image data includes at least one of a predetermined date information with respect to a date at which the image data is taken and a predetermined object information with respect to an object in the image.

10. A method for administrating image data comprising the steps of:
memorizing image data (102, 103) into a specific folder in an image data memory (152) of an image data administration apparatus (1) corresponding to a customer's ID attached with each image data, when the image data are transmitted from a terminal equipment (2) of a customer communicated with the image data administration apparatus (1) via a network (5);
memorizing at least one information (103) attached and transmitted with each image data into a specific folder in an image information memory (151) of the image data administration apparatus (1);
selecting all image data (103) having a specific information among the image data memorized in the image data memory (152) when the specific information is transmitted from the terminal equipment (2) of the customer;
forming an index image data (104) in which a plurality of thumbnail images corresponding to the selected image data are arranged in a predetermined order; and
outputting the index image data (16, 106) to at least one of the terminal equipment (2) of the customer and a photographic printer (3).

11. The method for administrating image data in accordance with claim 10 further comprising the step of:
forming a print order file (105) including instructions to a photographic printer which is instructed by the customer; and
transmitting the image data and the index image data with the print order file (16, 106) to the photographic printer (3) so as to print photographic prints corresponding to the image data and an index print corresponding to the index image data.

12. The method for administrating image data in accordance with claim 10 further comprising the steps of:
secondary selecting at least one image data (103) among the image data having the specific information corresponding to a selection by the customer when an instruction data corresponding to the selection is transmitted from the terminal equipment (2) of the customer;
renewing the index image data (104) corresponding to the selection by the customer with using secondary selected image data; and
outputting the renewed index image data (16, 106) to the terminal equipment (2) of the customer.

13. The method for administrating image data in accordance with claim 12 further comprising the steps of:
forming a print order file (105) including instructions to a photographic printer (3) which is instructed by the customer when a confirming data for confirming the renewed index image data by the customer is received; and
transmitting the image data (16, 106) corresponding to the images included in the renewed index image data and the renewed index image data with the print order file so as to print photographic prints (3) corresponding to the image data and an index print corresponding to the index image data.

14. The method for administrating image data in accordance with one of claims 10 to 13, wherein the information attached with each image data includes at least one of a predetermined date information with respect to a date at which the image data is taken and a predetermined object information with respect to an object in the image.

15. A program for administrating image data comprising the steps of:
receiving at least one image data and at least one information attached with each image data (16, 101) which are transmitted from a terminal equipment (2) of a customer via a network (5);
memorizing the image data (102, 103) into a specific folder in an image data memory (152) corresponding to a customer's ID attached with each image data;
memorizing the information (103) into a specific folder in an image information memory (151);
receiving a specific information (16, 101) transmitted from the terminal equipment (2) of the customer;
selecting all the image data (103) having the specific information among the image data memorized in the image data memory (152);
forming an index image data (104) in which a plurality of thumbnail images corresponding to the selected image data are arranged in a predetermined order; and
outputting the index image data (16, 106) to the terminal equipment (2) of the customer.

16. The program for administrating image data in accordance with claim 15 further comprising the steps of:
receiving a instruction data (16, 101) including confirmation of change of the index image data transmitted from the terminal equipment (2) of the customer;
selecting at least one image data (103) among the image data having the specific information corresponding to the instruction data;
renewing the index image data (104) corresponding to the instruction data by the customer with using secondary selected image data; and
outputting the renewed index image data (16, 106) to the terminal equipment (2) of the customer.

17. The program for administrating image data in accordance with claim 16 further comprising the steps of:
receiving a instruction data (16, 101) including confirmation with respect to the index image data and an order with respect to printing of photographic prints from the terminal equipment (2) of the customer;
forming a print order file (105) including instructions to a photographic printer corresponding to the instruction data; and
transmitting the image data and the index image data with the print order file (16, 106) to a photographic printer (3) so as to print photographic prints corresponding to the image data and an index print corresponding to the index image data.

18. The program for administrating image data in accordance with claim 15 further comprising the steps of:
receiving a instruction data (16, 101) including confirmation or change with respect to the index image data and an order with respect to printing of photographic prints from the terminal equipment (2) of the customer;
selecting at least one image data (103) among the image data having the specific information corresponding to the instruction data;
renewing the index image data (104) corresponding to the instruction data by the customer with using secondary selected image data;
forming a print order file (105) including instructions to a photographic printer corresponding to the instruction data; and
transmitting the image data and the index image data with the print order file (16, 106) to a photographic printer (3) so as to print photographic prints corresponding to the image data and an index print corresponding to the index image data.

19. A recording medium recording a program for administrating image data, wherein the program comprising the steps of:
receiving at least one image data and at least one information attached with each image data (16, 101) which are transmitted from a terminal equipment (2) of a customer via a network (5);
memorizing the image data (102, 103) into a specific folder in an image data memory (152) corresponding to a customer's ID attached with each image data;
memorizing the information (103) into a specific folder in an image information memory (151);
receiving a specific information (16, 101) transmitted from the terminal equipment (2) of the customer;
selecting all the image data (103) having the specific information among the image data memorized in the image data memory (152);
forming an index image data (104) in which a plurality of thumbnail images corresponding to the selected image data are arranged in a predetermined order; and
outputting the index image data (16, 106) to the terminal equipment (2) of the customer.

20. The recording medium recording the program for administrating image data in accordance with claim 19, wherein the program further comprising the steps of:
receiving a instruction data (16, 101) including confirmation of change of the index image data transmitted from the terminal equipment (2) of the customer;
selecting at least one image data (103) among the image data having the specific information corresponding to the instruction data;
renewing the index image data (104) corresponding to the instruction data by the customer with using secondary selected image data; and
outputting the renewed index image data (16, 106) to the terminal equipment (2) of the customer.

21. The recording medium recording the program for administrating image data in accordance with claim 20, wherein the program further comprising the steps of:
receiving a instruction data (16, 101) including confirmation with respect to the index image data and order with respect to printing of photographic prints from the terminal equipment (2) of the customer;
forming a print order file (104) including instructions to a photographic printer (3) corresponding to the instruction data; and
transmitting the image data and the index image data with the print order file (16, 106) to the photographic printer (3) so as to print photographic prints corresponding to the image data and an index print corresponding to the index image data.

22. The recording medium recording the program for administrating image data in accordance with claim 20, wherein the program further comprising the steps of:
receiving a instruction data (16, 101) including confirmation or change with respect to the index image data from the terminal equipment (2) of the customer;
selecting at least one image data (103) among the image data having the specific information corresponding to the instruction data;
renewing the index image data (104) corresponding to the instruction data by the customer with using secondary selected image data;
forming a print order file (105) including instructions to a photographic printer corresponding to the instruction data; and
transmitting the image data and the index image data with the print order file (16, 106) to the photographic printer (3) so as to print photographic prints corresponding to the image data and an index print corresponding to the index image data.
